# EUROPÄISCHE PATENTSCHRIFT

(11) **EP 1 090 541 B1**
(45) Veröffentlichungstag und Bekanntmachung des Hinweises auf die Patenterteilung: **27.07.2005**
(21) Anmeldenummer: 00120879.2
(22) Anmeldetag: 26.09.2000
(51) Int. Cl.: A01M 7/00, A01C 15/00, A01C 23/00

(54) **Landwirtschaftliche Verteilmaschine**
Agricultural spreader
Epandeur agricole

(30) Priorität: 07.10.1999 DE 19948407; 04.11.1999 DE 19953076
(43) Veröffentlichungstag der Anmeldung: 11.04.2001
(60) Teilanmeldung: 05005676.1
(73) Patentinhaber: Amazonen-Werke H. Dreyer GmbH & Co. KG, 49205 Hasbergen (DE)
(72) Erfinder: Kirsten, Eckart, Dipl.-Ing., 04205 Leipzig (DE); Marquering, Johannes, Dipl.-Ing., 49176 Hilter-Borgloh (DE); Oberheide, Friedrich, Dipl.-Ing., 49143 Bissendorf (DE); Rübner, Lutz, Dipl.-Ing., 04209 Leipzig (DE); Scheufler, Bernd, Dr., 49205 Hasbergen (DE)

(56) Entgegenhaltungen:
- FR-A- 2 662 904
- US-A- 5 353 988
- US-A- 5 755 382
- US-A- 5 772 082

## Beschreibung

Die Erfindung betrifft eine landwirtschaftliche Verteilmaschine gemäß des Oberbegriffes des Anspruches 1. Unter Verteilmaschinen werden beispielsweise Feldspritze, Großflächendüngerstreuer verstanden.

Derartige Verteilmaschinen werden in der Landwirtschaft in vielfältiger Weise eingesetzt. Die Landwirtschaft stellt die Forderungen, daß derartige Verteilmaschinen einen spurgetreuen Nachlauf sowohl bei Kurvenfahrt wie bei Fahrt quer zum Hang sowie eine ausreichende Kippsicherheit bei Querfahrt am Hang aufweisen.

Eine solche Maschine ist aus FR-A-2662904 bekannt.

Der Erfindung liegt die Aufgabe zugrunde, hier auf einfache Weise Abhilfe zu schaffen.

Diese Aufgabe wird erfindungsgemäß durch die Merkmale des Patentanspruches 1 gelöst. Infolge dieser Maßnahmen wird in einfacher Weise der auf die Maschine bei Kurvenfahrt einwirkenden Zentrifugalkraft entgegengewirkt, so daß die Kippsicherheit der Maschine bei Kurvenfahrt erheblich verbessert wird. Die Maschine kann mit größerer Geschwindigkeit eine Kurve durchfahren, ohne daß die Gefahr besteht, daß die Maschine umkippt. Somit wird die Verteilmaschine für die Kurvenfahrt und/oder bei sich leerendem Tank verbessert.

In einfacher Weise wird dieses dadurch verwirklicht, daß Sensorelemente zur Erfassung des Lenkeinschlages der Maschine und der Fahrgeschwindigkeit der Verteilmaschine vorhanden sind, daß aus den Daten des Lenkeinschalges und der Fahrgeschwindigkeit die auf die Verteilmaschine bei Kurvenfahrt einwirkende Fliehkraft ermittelt wird, und daß entsprechend der Größe der auftretenden Fliehkraft die Maschine zum Kurveninneren neigbar ist.

Bei einer anderen Lösung ist hierzu vorgesehen, daß ein Sensor zur Ermittlung der auf die Verteilmaschine bei Kurvenfahrt einwirkenden Fliehkraft vorgesehen ist, und daß entsprechend der ermittelten Fliehkraft die Maschine zum Kurveninneren durch Verstellung der Verstellelemente neigbar ist.

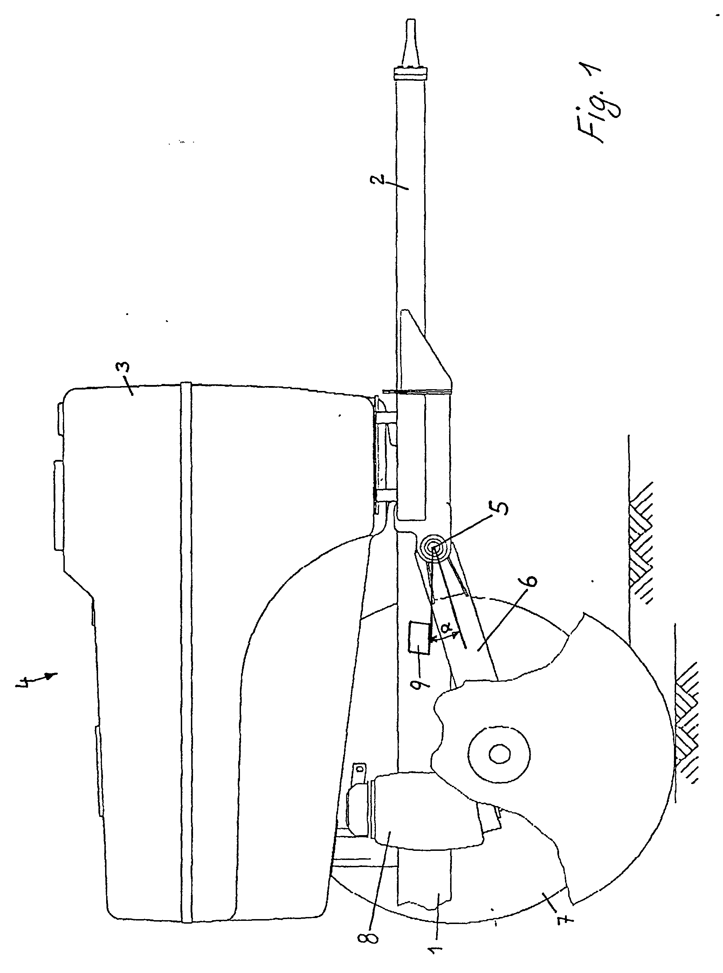

Weitere Einzelheiten der Erfindung sind der Beispielsbeschreibung und den Zeichnungen zu entnehmen. Hierbei zeigen
- Fig. 1: die als Feldspritze ausgebildete Verteilmaschine in Seitenansicht und in Prinzipdarstellung,

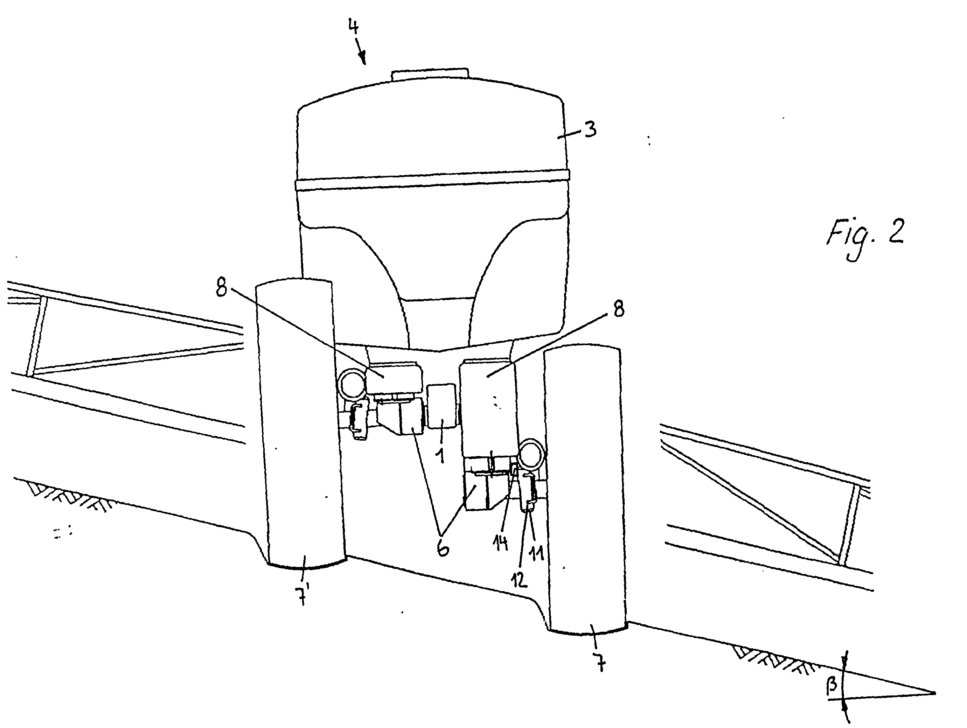

- Fig. 2: die als Feldspritze ausgebildete Verteilmaschine in der Ansicht von hinten und in Prinzipdarstellung,

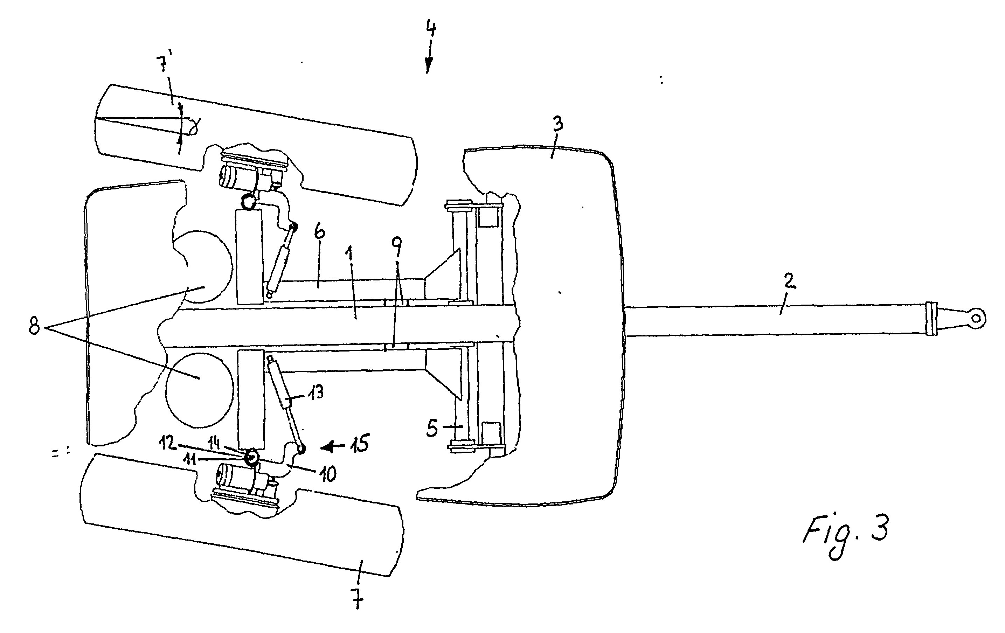

- Fig. 3: die Feldspritze in der Draufsicht und in Prinzipdarstellung,

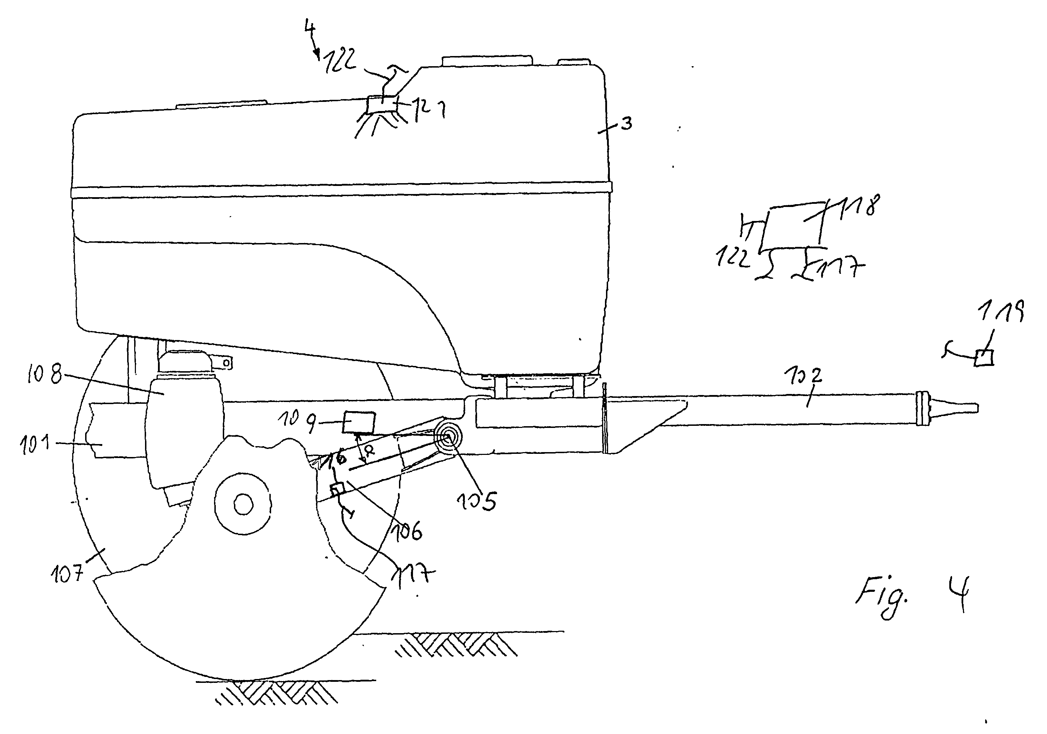

- Fig. 4: die als Feldspritze ausgebildete Verteilmaschine in Seitenansicht und in Prinzipdarstellung,

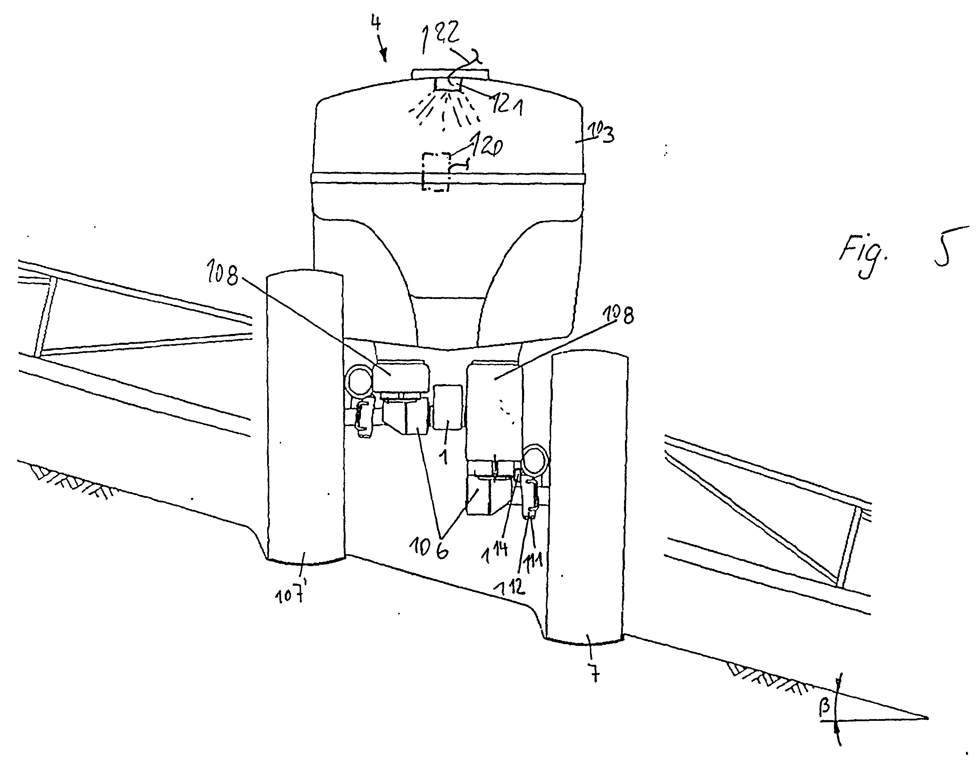

- Fig. 5: die als Feldspritze ausgebildete Verteilmaschine in der Ansicht von hinten und in Prinzipdarstellung und

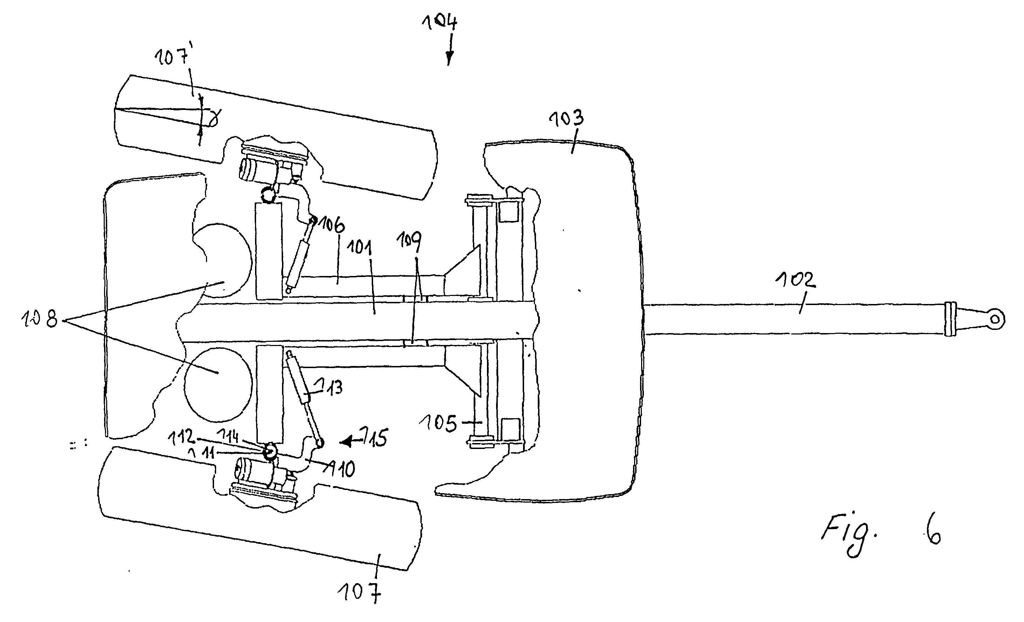

- Fig. 6: die Feldspritze in der Draufsicht und in Prinzipdarstellung.

Die Feldspritze weist den Rahmen 1 auf, an dessen Vorderseite die Zugdeichsel 2 zur Ankupplung an eine Zugeinrichtung eines Ackerschleppers angeordnet ist. Auf dem Rahmen 1 ist der Vorratstank 3 angeordnet. Desweiteren ist im hinteren Bereich eine nicht dargestellte Verteileinrichtung, beispielsweise ein Verteilergestänge angeordnet. An dem Rahmen 1 der Verteilmaschine 4 ist auf jeder Seite mittels eines Gelenkes 5 eine Schwinge 6 in aufrechter Ebene bewegbar angelenkt. Am hinteren Ende der Schwinge 6 ist ein Laufrad 7 und 7' jeweils drehbar gelagert. Zwischen jeder Schwinge 6 und dem Rahmen 1 ist ein Luftfederelement 8, welches als Feder- und Stelleinrichtung ausgebildet ist, angeordnet. Jeder Schwinge 6 ist ein Sensor 9 zugeordnet, mittels welche die Schwingenstellung bzw. der Winkel α der Schwingen 6 zur Horizontalen bzw. zum Rahmen 1 ermittelbar ist.

Die Laufräder 7 und 7' sind mittels eines Achsenschenkels 10 über ein eine aufrechte Drehachse 11 aufweisendes Gelenk 12 an der Schwinge 6 befestigt. Zwischen der Schwinge 6 und dem Achsschenkel 10 ist ein als Hydraulikzylinder 13 ausgebildetes Stellelement angeordnet. Jedem Achsschenkel 10 ist ein Sensor 14 zugeordnet, mit welchem die Achsschenkelstellung zu dem Rahmen 1 bzw. zu der Schwinge 6 erfaßbar ist.

Die Sensoren sind mittels Signalübertragungseinrichtungen, beispielsweise Leitungen mit einer elektronischen Steuer- und Regeleinrichtung verbunden. Die Sensoren übermitteln Impulse an die elektronische Regeleinrichtung, so daß die elektronische Regeleinrichtung auswerten kann, in welcher Stellung sich die Achsschenkel und die Schwingen 6 zueinander befinden. Die elektronische Regeleinrichtung erfaßt einerseits über die Sensoren die Lage der Achsschenkel 10 und der Schwingen 6 und andererseits steuert die elektronische Regeleinrichtung über die Feder- und Stelleinrichtung 8 die Stellung der Schwingen 6 bzw. die Höhenlage der Laufräder 7 und 7' zum Rahmen 1 der Verteilmaschine 4 sowie die Stellung der Achsschenkel 10 und somit der Laufräder 7 und 7'.

Hierbei sind die Stellelemente 13 für die Achsschenkel 10 derart ansteuerbar, daß am Hang ein spurgetreuer Nachlauf gewährleistet ist und bei Kurvenfahrt ebenfalls ein spurgetreuer Nachlauf der Laufräder 7 und 7' in der Spur der Schlepperräder sichergestellt ist. Hierbei ist die Regeleinrichtung derart ausgelegt, daß sie entsprechend der übermittelten Signale die jeweilige Lage der Verteilmaschine 4 zum Ackerschlepper erfaßt, so daß die Laufräder 7 und 7' in der Spur der Schlepperräder folgen. Bei Geradeausfahrt steuert die elektronische Regeleinrichtung die Laufräder 7 und 7' durch Ansteuerung der Stellelemente 13 derart, daß eine Geradeausfahrt gewährleistet ist. Wenn eine Kurve durchfahren wird, werden die Laufräder 7 und 7' über die Stellelemente 13 derart angestellt, daß sie der Schlepperspur folgen. Hierbei ist die elektronische Regeleinrichtung derart ausgelegt, daß die Lenkgeometrie in elektronischer Weise berücksichtigt wird, so daß die Laufräder 7 und 7' über die Stellelemente 13 entsprechend verstellt werden. Hierbei wird das kurveninnere Rad stärker eingeschlagen als das kurvenäußere Rad.

Desweiteren ist für die Verteilmaschine 4 eine Lageerfassungseinrichtung zur Erfassung der Neigung γ und Lage vorgesehen. Desweiteren ist der elektronischen Regeleinrichtung eine Einrichtung zur Erfassung der Horizontalen, beispielsweise eine "elektronische Wasserwaage" zugeordnet. Hierbei ist die elektronische Regeleinrichtung derart eingerichtet, daß die Feder- und Stelleinrichtung 8, die die Lage der Schwingen 6 zum Rahmen 1 einstellen, angesteuert werden, daß bei einer Fahrt quer zum Hang eine zumindest annähernde Horizontallage des Rahmens 1 der Verteilmaschine 4 durch entsprechende Einstellung der Schwingen 6 über die Feder- und/oder Stelleinrichtung 8 einstellbar ist. Hierbei werden die Stelleinrichtungen 8, die jeder Schwinge 6 zugeordnet sind, entsprechend angesteuert, so ist beispielsweise denkbar, daß die Schwinge 6, die dem auf der hangabwärtigen Seite laufenden Laufrad 7 zugeordnet ist, gegenüber dem Rahmen 1 nach unten gedrückt wird, während die Schwinge 6, die dem hangaufwärtigen Laufrad 7' zugeordnet wird, nach oben gezogen wird.

Hierbei ist die elektronische Steuer- und Regeleinrichtung derart ausgelegt, daß der Federweg der als Luftfederelemente ausgebildeten Feder- und Stelleinrichtung 8 begrenzbar ist, so daß eine zumindest eingestellte Mindestfederung erhalten bleibt, damit eine ausreichende Abfederung der Verteilmaschine 4 während des Ausbringvorganges sichergestellt ist.

Desweiteren kann die elektronische Regeleinrichtung berücksichtigen, daß der Federweg der Feder- und/oder Stelleinrichtung 8 in Abhängigkeit des Füllstandes und/oder der Neigung β des Hanges und/oder der Neigung des Rahmens 1 der Verteilmaschine 4 einstellbar ist.

Auch kann die elektronische Steuer- und Regeleinrichtung derart ausgebildet sein, daß der Federweg bzw. die Federkennlinie der Feder- und/oder Stelleinrichtung 8 in Abhängigkeit der Fahrgeschwindigkeit einstellbar ist, so daß für die jeweilige Fahrgeschwindigkeit ein optimales Federverhalten gewährleistet bleibt.

Desweiteren kann die Regeleinrichtung derart ausgelegt sein, daß in Abhängigkeit der von den Sensoren 9, die der Schwinge 6 zugeordnet sind, die Neigung der Verteilmaschine 4 quer zum Hang überwacht und entsprechend vorgegebener Grenzwerte nachgestellt wird.

Auch kann die Regeleinrichtung derart ausgebildet sein, daß in Abhängigkeit der Stellung der Räder 7 und 7' eine Nulllage für die Geradeausfahrt gelernt werden kann.

Desweiteren kann die Regeleinrichtung derart ausgebildet sein, daß in Abhängigkeit des verwendeten Schleppers eine unterschiedliche Arbeitshöhe an der Verteilmaschine 4 eingestellt werden kann.

Die beiden Regel- und Steuerkreise für die Ansteuerung der Stellelemente 8, die der Schwinge 6 zugeordnet sind und der Stellelemente 13, die der Achsschenkellenkung 15 zugeordnet sind, können getrennt und auch gleichzeitig wirksam sein.

Die Feldspritze weist den Rahmen 101 auf, an dessen Vorderseite die Zugdeichsel 102 zur Ankupplung an eine Zugeinrichtung eines Ackerschleppers angeordnet ist. Auf dem Rahmen 101 ist der Vorratstank 103 angeordnet. Desweiteren ist im hinteren Bereich eine nicht dargestellte Verteileinrichtung, beispielsweise ein Verteilergestänge angeordnet. An dem Rahmen 101 der Verteilmaschine 104 ist auf jeder Seite mittels eines Gelenkes 105 eine Schwinge 106 in aufrechter Ebene bewegbar angelenkt. Am hinteren Ende der Schwinge 106 ist ein Laufrad 107 und 107' jeweils drehbar gelagert. Zwischen jeder Schwinge 6 und dem Rahmen 1 ist ein Luftfederelement 108, welches als Feder- und Stelleinrichtung ausgebildet ist, angeordnet. Jeder Schwinge 106 ist ein Sensor 109 zugeordnet, mittels welche die Schwingenstellung bzw. der Winkel α der Schwingen 106 zur Horizontalen bzw. zum Rahmen 101 ermittelbar ist.

Die Laufräder 107 und 107' sind mittels eines Achsenschenkels 110 über ein eine aufrechte Drehachse 111 aufweisendes Gelenk 112 an der Schwinge 106 befestigt. Zwischen der Schwinge 106 und dem Achsschenkel 110 ist ein als Hydraulikzylinder 113 ausgebildetes Stellelement angeordnet. Jedem Achsschenkel 110 ist ein Sensor 114 zugeordnet, mit welchem die Achsschenkelstellung zu dem Rahmen 101 bzw. zu der Schwinge 106 erfaßbar ist.

Die Sensoren sind mittels Signalübertragungseinrichtungen, beispielsweise Leitungen mit einer elektronischen Steuer- und Regeleinrichtung verbunden. Die Sensoren übermitteln Impulse an die elektronische Regeleinrichtung, so daß die elektronische Regeleinrichtung auswerten kann, in welcher Stellung sich die Achsschenkel und die Schwingen 106 zueinander befinden. Die elektronische Regeleinrichtung erfaßt einerseits über die Sensoren die Lage der Achsschenkel 110 und der Schwingen 106 und andererseits steuert die elektronische Regeleinrichtung über die Feder- und Stelleinrichtung 108 die Stellung der Schwingen 106 bzw. die Höhenlage der Laufräder 107 und 107' zum Rahmen 101 der Verteilmaschine 104 sowie die Stellung der Achsschenkel 110 und somit der Laufräder 107 und 107'.

Hierbei sind die Stellelemente 113 für die Achsschenkel 110 derart ansteuerbar, daß am Hang ein spurgetreuer Nachlauf gewährleistet ist und bei Kurvenfahrt ebenfalls ein spurgetreuer Nachlauf der Laufräder 107 und 107' in der Spur der Schlepperräder sichergestellt ist. Hierbei ist die Regeleinrichtung derart ausgelegt, daß sie entsprechend der übermittelten Signale die jeweilige Lage der Verteilmaschine 104 zum Ackerschlepper erfaßt, so daß die Laufräder 107 und 107' in der Spur der Schlepperräder folgen. Bei Geradeausfahrt steuert die elektronische Regeleinrichtung die Laufräder 107 und 107' durch Ansteuerung der Stellelemente 113 derart, daß eine Geradeausfahrt gewährleistet ist. Wenn eine Kurve durchfahren wird, werden die Laufräder 107 und 107' über die Stellelemente 113 derart angestellt, daß sie der Schlepperspur folgen. Hierbei ist die elektronische Regeleinrichtung derart ausgelegt, daß die Lenkgeometrie in elektronischer Weise berücksichtigt wird, so daß die Laufräder 107 und 107' über die Stellelemente 113 entsprechend verstellt werden. Hierbei wird das kurveninnere Rad stärker eingeschlagen als das kurvenäußere Rad.

Desweiteren ist für die Verteilmaschine 104 eine Lageerfassungseinrichtung zur Erfassung der Neigung γ und Lage vorgesehen. Desweiteren ist der elektronischen Regeleinrichtung eine Einrichtung zur Erfassung der Horizontalen, beispielsweise eine "elektronische Wasserwaage" zugeordnet. Hierbei ist die elektronische Regeleinrichtung derart eingerichtet, daß die Feder- und Stelleinrichtung 108, die die Lage der Schwingen 106 zum Rahmen 101 einstellen, angesteuert werden, daß bei einer Fahrt quer zum Hang eine zumindest annähernde Horizontallage des Rahmens 101 der Verteilmaschine 104 durch entsprechende Einstellung der Schwingen 106 über die Feder- und/oder Stelleinrichtung 108 einstellbar ist. Hierbei werden die Stelleinrichtungen 108, die jeder Schwinge 106 zugeordnet sind, entsprechend angesteuert, so ist beispielsweise denkbar, daß die Schwinge 106, die dem auf der hangabwärtigen Seite laufenden Laufrad 107 zugeordnet ist, gegenüber dem Rahmen 101 nach unten gedrückt wird, während die Schwinge 106, die dem hangaufwärtigen Laufrad 107' zugeordnet wird, nach oben gezogen wird.

Hierbei ist die elektronische Steuer- und Regeleinrichtung derart ausgelegt, daß der Federweg der als Luftfederelemente ausgebildeten Feder- und Stelleinrichtung 108 begrenzbar ist, so daß eine zumindest eingestellte Mindestfederung erhalten bleibt, damit eine ausreichende Abfederung der Verteilmaschine 104 während des Ausbringvorganges sichergestellt ist.

Desweiteren kann die elektronische Regeleinrichtung berücksichtigen, daß der Federweg der Feder- und/oder Stelleinrichtung 108 in Abhängigkeit des Füllstandes und/oder der Neigung β des Hanges und/oder der Neigung des Rahmens 1 der Verteilmaschine 104 einstellbar ist.

Auch kann die elektronische Steuer- und Regeleinrichtung derart ausgebildet sein, daß der Federweg bzw. die Federkennlinie der Feder- und/oder Stelleinrichtung 108 in Abhängigkeit der Fahrgeschwindigkeit einstellbar ist, so daß für die jeweilige Fahrgeschwindigkeit ein optimales Federverhalten gewährleistet bleibt.

Desweiteren kann die Regeleinrichtung derart ausgelegt sein, daß in Abhängigkeit der von den Sensoren 109, die der Schwinge 106 zugeordnet sind, die Neigung der Verteilmaschine 104 quer zum Hang überwacht und entsprechend vorgegebener Grenzwerte nachgestellt wird.

Auch kann die Regeleinrichtung derart ausgebildet sein, daß in Abhängigkeit der Stellung der Räder 107 und 107' eine Nulllage für die Geradeausfahrt gelernt werden kann.

Desweiteren kann die Regeleinrichtung derart ausgebildet sein, daß in Abhängigkeit des verwendeten Schleppers eine unterschiedliche Arbeitshöhe an der Verteilmaschine 104 eingestellt werden kann.

Die beiden Regel- und Steuerkreise für die Ansteuerung der Stellelemente 108, die der Schwinge 106 zugeordnet sind und der Stellelemente 113, die der Achsschenkellenkung 115 zugeordnet sind, können getrennt und auch gleichzeitig wirksam sein.

Im Bereich der Laufräder 107 ist der Sensor 116 zur Ermittlung der Fahrgeschwindigkeit angeordnet. Dieser Sensor 116 ist mit der als Kabel 117 ausgebildeten Signalübertragungseinrichtung mit der elektronischen Regel- und Steuereinrichtung 118 verbunden. Desweiteren ist ein Sensor 119 zur Erfassung des Lenkeinschlages der nicht dargestellten Zugmaschine vorgesehen. Aus den von dem Sensor 119 über den Lenkeinschlag und der von dem Sensor 116 zur Ermittlung der Fahrgeschwindigkeit übermittelten Daten wird mittels der elektronischen Steuer- und Regeleinrichtung 118 die auf die Verteilmaschine bei Kurvenfahrt einwirkende Fliehkraft ermittelt. Aufgrund der ermittelten Fliehkraft, unter Berücksichtigung des Füllungsgrades des Vorratstanks 103, wird so die tatsächlich auf die Maschine einwirkende Fliehkraft ermittelt. Entsprechend der ermittelten und auftretenden Fliehkraft wird die Maschine bei Kurvendurchfahrt entsprechend geneigt, in dem die Stellelemente 108 entsprechend angesteuert werden, so daß das entsprechende Laufrad 107 oder 107' angehoben oder abgesenkt wird, damit die Maschine entsprechend zum Kurveninneren geneigt wird. Somit wird die Kippgefahr erheblich reduziert.

An Stelle des Sensors 116 zur Ermittlung der Fahrgeschwindigkeit und des Sensors 119 zur Ermittlung des Lenkeinschlages kann der mit strichpunktierten Linien vorgesehene Sensor 120 vorgesehen sein, der die auf die Verteilmaschine bei Kurvenfahrt einwirkende Fliehkraft ermittelt. Aufgrund der von diesem Sensor 120 ermittelten Daten über die bei Kurvenfahrt einwirkende Fliehkraft wird die Maschine zum Kurveninneren bei Durchfahren einer Kurve durch Verstellung der Verstellelemente 108 entsprechend geneigt, damit gewährleistet ist, daß die Maschine bei relativ schneller Kurvendurchfahrt nicht umkippt.

Desweiteren ist im Inneren des Vorratstanks 103 der Sensor 121, der die Hin- und Her-"Schwappbewegung" der Flüssigkeit in dem Vorratstank 103 erfaßt, angeordnet. Dieser Sensor 121 ist ebenfalls mit der elektronischen Regeleinrichtung 118 über das Kabel 122 oder einer anderen Signalübertragungseinrichtung verbunden. Mittels der von dem Sensor 121 an die elektronische Stelleinrichtung übermittelten Daten werden von der elektronischen Stelleinrichtung 118 entsprechend eines abgespeicherten Softwareprogrammes die Stellelemente 108 angesteuert, so daß durch die Bewegung der Verteilmaschine, die durch die Betätigung der Stellelemente 108 hervorgerufen wird, der Schwappbewegung der Flüssigkeit entgegengewirkt wird, so daß eine Stabilisierung der Verteilmaschine trotz des Bestrebens der Flüssigkeit zum Hin- und Herschwappen erreicht wird, weil durch die entsprechende entgegengesetzte bzw. entsprechende Bewegung der Verteilmaschine durch die Ansteuerung der Stellelemente 108 und der dadurch hervorgerufenen Bewegung der Verteilmaschine der Schwappbewegung der Flüssigkeit entgegengewirkt wird. Hierdurch wird ein wesentlich stabilisiertes Fahrverhalten der Feldspritze erreicht.

## Patentansprüche

1. Landwirtschaftliche Verteilmaschine, wie beispielsweise Feldspritze, mit einem Laufräder aufweisenden Fahrwerk, einem Rahmen, auf dem Aufbauelemente, wie beispielsweise zumindest ein Vorratstank und eine Verteileinrichtung angeordnet sind, wobei jedes Laufrad mittels Verstellelemente am Rahmen in aufrechter Ebene bewegbar angelenkt ist, **dadurch gekennzeichnet, dass** die Stellelemente (108) bei Kurvenfahrt derart ansteuer- und betätigbar sind, dass der Schwerpunkt der Maschine zum Kurveninneren verlagerbar ist, dass Mittel (116,119,120) zur Ermittlung der bei Kurvenfahrt auf die Verteilmaschine einwirkenden Fliehkraft vorgesehen sind, und dass entsprechend der Größe der auftretenden und/oder ermittelten Fliehkraft die Maschine zum Kurveninneren durch Verstellung der Verstellelemente (108) neigbar ist.

2. Verteilmaschine nach Anspruch 1, **dadurch gekennzeichnet, dass** Sensorelemente (116, 119) zur Erfassung des Lenkeinschlages der Zugmaschine und der Fahrgeschwindigkeit der Verteilmaschine vorhanden sind, dass aus den Daten des Lenkeinschlages und der Fahrgeschwindigkeit die auf die Verteilmaschine bei Kurvenfahrt einwirkende Fliehkraft ermittelt wird.

3. Verteilmaschine nach Anspruch 1, **dadurch gekennzeichnet, dass** ein Sensor (120) zur Ermittlung der auf die Verteilmaschine bei Kurvenfahrt einwirkende Fliehkraft vorgesehen ist.

## Claims

1. Agricultural distributor, such as for example a field sprayer, having a framework which includes running wheels and a frame on which are disposed structural elements, such as for example at least one hopper and one distributing device, wherein each running wheel is pivotally connected on the frame by means of adjusting elements so as to be displaceable in the upright plane, **characterised in that** when said agricultural distributor goes around bends the adjusting elements (108) are controllable and actuatable in such a manner that the centre of gravity of the distributor is displaceable towards the inside of the bend, **in that** means (116, 119, 120) are provided to determine the centrifugal force working on the distributor when it travels around bends, and **in that** corresponding to the size of the centrifugal force occurring and/or determined, the distributor is inclinable towards the inside of the bends by adjusting the adjusting elements (108).

2. Distributor according to claim 1, **characterised in that** sensor elements (116, 119) are provided to detect the turning circle of the tractor and the speed of the distributor, **in that** the centrifugal force working on the distributor when it travels around bends is determined from the data of the turning circle and the speed.

3. Distributor according to claim 1, **characterised in that** a sensor (120) is provided to determine the centrifugal force working on the distributor when it travels around bends.

## Revendications

1. Epandeur agricole tel que pulvérisateur agricole comportant un train de roulement muni de roues de sustentation, un châssis portant les éléments d'équipement tels que par exemple au moins un réservoir et une installation de distribution, chaque roue étant articulée au châssis par des éléments d'actionnement permettant son déplacement dans un plan vertical,
**caractérisé en ce que**
les éléments d'actionnement (108) sont commandés et actionnés dans un déplacement en courbe pour déplacer le centre de gravité de la machine vers l'intérieur de la courbe,
des moyens (116, 119, 120) sont prévus pour déterminer la force centrifuge agissant sur l'épandeur circulant en courbe et en fonction de l'amplitude de la force centrifuge produite et/ ou déterminée, la machine s'incline vers l'intérieur de la courbe par actionnement des éléments de réglage (108).

2. Epandeur selon la revendication 1,
**caractérisé en ce que**
des capteurs (116, 119) détectent le braquage des roues du tracteur et la vitesse de déplacement de l'épandeur et à partir des données relatives au braquage des roues et de la vitesse de déplacement on détermine la force centrifuge agissant sur l'épandeur circulant en courbe.

3. Epandeur selon la revendication 1,
**caractérisé par**
un capteur (120) pour déterminer la force centrifuge agissant sur l'épandeur circulant en courbe.
